# EUROPEAN PATENT APPLICATION

(11) **EP 0 593 130 A1**
(43) Date of publication of application: **20.04.1994**
(21) Application number: 93202896.2
(22) Date of filing: 15.10.1993
(51) Int. Cl.: C04B 28/00

(54) **Process for the immobilisation of waste products**

(71) Applicant: van Doezelaar, Antoon, NL-6201 BC Maastricht (NL)
(72) Inventor: van Doezelaar, Antoon, NL-6201 BC Maastricht (NL)

(57) **Abstract**

Process for the immobilisation of waste products wherein a mixture is formed of the waste products, inorganic binding agents, a material with puzzolana characteristics and water, to which mixture alkaline compounds are added untill a pH of 13.0 or higher is obtained in order to activate the material with the puzzolana chararcteristics. The pH-value is always increased up to a value at which the glass matrix of the material with the puzzolana chararcteristices is destroyed and dissolved. The material with the puzzolane characteristics may contain powder coal fly ash.

## Description

The invention relates to a process for the immobilisation of waste products, wherein the waste products are mixed with inorganic binding agents, a material with puzzolana characteristics and water.

By immobilisation is meant a technological process wherein the physical or chemical characteristics of the waste products are modified in such a way that the chance of dissemination of the products with environmental risks by means of dissolving, erosion or atomising can be decreased on the long term. As part of the immobilisation can be treated:
* Solidification, i.e. the conversion into solid state of liquid waste products by means of additives.
* Stabilisation, i.e. the fixation of the particles of powderlike of granulate waste products and sludges by means of additives.
* Making inert, i.e. the chemical enclosure of contaminates in the silicate phase or mineral phase with very low solubility, in such a way that even after granulation or atomizing no significant solving of the products occurs.

Very different waste products can be immobilised such as waste products resulting from the zinc production process, remnants of the burning of waste materials, galvanic remnants of power plants, contaminated dredging material etc.

There are different techniques for the immobilisation of waste products : binding with inorganic binding agents such as cement, cement and fly ash, cement and limestone, limestone and fly ash, binding with organic binding agents, treatment in an autoclave, i.e. inorganic binding in a hydrothermal way, sintering, glazing and/or melting, surface-sealing. Further Special pre-treatments must be involved so as to Convert the toxic substances in less dangerous products, such as the conversion of Cr VI into Cr III by means of the addition of ferro sulphate and the conversion of cyanide into the harmless CO2.

The most usual techniques are based upon inorganic binding agents. Especially cement is very often used. Very frequently used are systems wherein apart from a limestone containing binding agent, such as cement or lime, products with puzzolana characteristics are added. Most frequently used is fly ash of powder coal, which is the remnant of power plants wherein powder coal is burned. Another material with puzzolana charateristics which originates as a by-product in industrial processes is silica fume. Further natural puzzolana's can be used such a trass, diatomite earth and santorin earth. Synthetic puzzolana's such as metakaoline can also be used.

Materials with puzzolana charateristics can react with lime into calcium silica hydrates and calcium alumina hydrates. A very strong increase of the density of the structure is the result. It is known that the mobility of the ions in a matrix of cement containing such a puzzolana is very much lower, e.g. 50 times, than the mobility in a matrix without puzzolana. As a result of the puzzolana reaction more calcium silica hrydrate gel and calcium alumina hydrate gel is produced whereby more ions are incorporated in the gel structure. Examples are ions of lithium and chromium.

As lime-containing binding agents use can be made of lime, Portland-cement, powder coal fly ash cement, blast furnace cement, oxychloride cement and all so-called composite cements. In all circumstances there can be an addition of gypsum or anhydride.

Although in some circumstances important improvements are obtained by the addition of puzzolana's to cement and e.g. the combination of Portland cement with powder coal fly ash is a standard process for the immobilisation, it has been found that the contribution of puzzolana's to the combination of some waste products and cement is very low.

It is an object of the invention to improve this effect. This object is achieved in that alkali compounds are added to the mixture in order to activitate the material with the puzzolana characteristics.

It has been found that by increasing the pH-value of the mixture the incorporation of waste products becomes more effective. In addition it is a special advantage if the pH-value is increased to such a value that the glass matrix structure of the the material with the puzzolana characteristics is destroyed. This is necessary in order to obtain the formation of calcium silica hydrates and aluminium hydrates. Some binding agents such as Porland cement will normally generate a pH-value which is high enough to activate the material with the puzzolana charateristics. However in the case of the use of acid or neutral waste products the pH-value can easily remain below the value of 13 whereby the puzzolana acivity is low; there is no question that the immobilisation activity has been improved.

A special merit of the system is that by regulation of the pH-value on a level higher the 13.5 there are indications that many organic chlorine compounds, such as PCB's, dioxines etc. are decomposed whereby the toxic compounds are decomposed and converted into harmless compounds.

It is possible to pretreat the waste material, but this is not necessary. The pretreatment can consist of dissolving, removing of components, the pretreatment of the waste material such as the conversion of Cr VI into the less solvable CR III by means of the addition of ferro sulphates or another reducing agent or the Conversion of cyanides by means of a treatment with sulphuric acid according to the reaction:

2 HCN + 2 H2O + H2SO4 ----> 2 CO2 + (NH4)2SO4

or with peroxides.

Thereupon the waste product is mixed with the binding agent and the puzzolana material whereupon the alkaline activator is added, the amount of activator to be added being defined in advance. The sequence of mixing is not critical. Dependent upon the type of waste product additives can be added such as materials to improve the cement hydratation, which can be reduced or hindered by organic compounds but also by phosphates and zinc salts. An example of such a salt is calcium chlorine, a combination of salts known as Glorit(R), water glas and others. Also special materials can be added to bind special compounds such as sulphides for some heavy metals ions. This binding can be of physical nature but also of a physical-chemical nature. Materials with a high specific surface can be used in order to absorb organic materials, such as zeolites and clay materials. Preferably the mixing is done in a high intensity mixer in order to improve the homogenity. It must be ensured that the right activiation is obtained throughout the whole mass. After the mixing process the mixture must be made more dense and air must be removed as much as possible. This can be done by using density increasing techniques normally used in the civil engineering. After hardening, which normally takes at least 28 days, it has been found that as a result of the activation in certain cases the strenght has increased with a factor 10 whereas the speed of dissolving has decreased drastically. This results from the so-called standtest (Concept NEN 7345) wherein the diffusion coefficient has been defined which for some ions has been decreased with a factor 100.

The invention will now be eludicated by means of the follwing examples.

### Example I

A powder coal fly ash originating from an industrial burning installation has been contaminated by vanadium. The fly ash contains 300 mg/kg vanadium. The fly ash is mixed with Portland cement and water in the following ratio's:

| | |
|---|---|
| Contaminated fly ash | 100 parts by weight |
| Portland cement | 20 parts by weight |
| Water | 14 parts by weight |

In this combination the proctor density has its highest value. Two mixtures are prepared, one (A) with normal water and a second (B) with water wherein so much caustic soda has been added that after hardening the pH is equal to 13.7. This result is achieved when in stead of normal water a solution of 2 % NaOH is added.
The pressure resistance of the obtained product is shown in table A.

**TABLE A**

| | 7 days MPa | 28 days MPa | dry density kg/m3 |
|---|---|---|---|
| A | 1.0 | 2.4 | 990 |
| B | 2.5 | 7.0 | 995 |

After 90 days the test pieces are submitted to a solvent test (diffusion test) according to concept NEN 7345. The amount of vanadium dissolved after 64 days is equal to

| | |
|---|---|
| A | 400 mg/m3 |
| B | 20 mg/m3 |

### Example II

A contaminated ground contains the contaminations listed in table C. The ground is mixed with Portland cement, a powder coal fly ash according to the test EN 450 "Fly ash for concrete" and water in the following ratio's.

| | |
|---|---|
| Contaminated ground | 100 parts by weight |
| Portland Cement | 30 parts by weight |
| Fly ash | 70 parts by weight |
| Water | 40 parts by weight |

Two mixtures have been prepared of which one with a pH-adjusment by means of caustic soda and one with normal water. The pressure resistance is as shown in table B

**TABLE B**

| | 7 days | 28 days |
|---|---|---|
| A | 0.1 | 0.3 |
| B with pH-adjustment | 1.0 | 3.0 |

The results of the dissolving test after 64 days according to NEN 7345 (diffusion test) are represented in Table C

**TABLE C**

| | Composition ground (mg/kg) | Cumulative dissolving (mg/m2) | |
|---|---|---|---|
| | | A | B |
| Cd | 0.4 | 0.3 | 0.1 |
| As | 880 | 150 | 50 |
| Cu | 600 | 100 | 5 |
| Zn | 2 | 0.5 | < 0.1 |
| Pi | 3 | 0.3 | < 0.1 |

### Example III

In a deposit of waste products apart from heavy metals also organo chlorine compositions are present especially PCB's (poly-chlorine bifenyl) the concentration of which being about 75 ppm, which means that according to Dutch law they are so-called WCA-obliged.

The waste product is mixed with powder coal fly ash, cement and water in the following ratio's

| | |
|---|---|
| Waste material with PCB's | 100 parts by weight |
| Portland cement | 30 parts by weight |
| Fly ash | 60 parts by weight |
| Water | 35 parts by weight |

Mixtures are prepared wherin the pH is regulated to 12.5 (normal water) 13, 13.4 and 13.8 ( the latter three by the addition of caustic soda). The pressure resistance is shown in table D:

**TABLE D**

| | | 7 days | 28 days |
|---|---|---|---|
| A | | 0.05 | 0.7 |
| B | pH = 13.0 | 0.10 | 1.0 |
| C | pH = 13.4 | 0.80 | 1.7 |
| D | pH = 13.8 | 1.5 | 4.5 |

By means of a press the free water present in the test pieces after 90 days is removed according to a method developed by Diamond. The so-called pore water is analysed by means of a potentiometric titration to define the chlorine content. The amount of chlorine measured is shown in table E

**TABLE E**

| pH | Chloride in pore water g/l |
|---|---|
| 12.5 | < 0.01 |
| 13.0 | < 0.01 |
| 13.4 | 0.03 |
| 13.8 | 0.45 |

From Table E it becomes clear that most of the organochlorine compounds has been converted by hydrolyse into chloride. From a analysis of the PCB-level in the hardened material it has been found that the PCB-level has decreased by 3/4 of the initial level. After one year the analysis of the composition with the pH-level of 13.8 was repeated. Most of the organochlorine compounds prooved to be converted into chloride-ions.

## Claims

1. Process for the immobilisation of waste products wherein the waste products are mixed with inorganic binding agents, a compound with puzzolana characteristics and water, characterized in that alkaline compounds are added to the mixture in order to activate the compound with the puzzolana characteristics.

2. Process according to claim 1, characterized in that the alkaline compounds are added until a pH-value is reached at which the glass matrix of the material with the puzzolana characteristics is destroyed and solved.

3. Process according to one of the preceeding claims, characterised in that the material with the puzzolana characteristics contains powder fly ash and in that the alkali compounds are added until the alkanility has reached the value of at least 13.0.

4. Process according to one of the preceeding claims, characterised in that the alkanility is increased to a value of at least 13.5.

5. Process according one of the claims 1-4, characterised in that the material with the puzzolana characteristics is selected from the group of silicafume, blast furnace slack, electro-steel slack, diatomite earth, sartorin earth and metakaoline or mixtures thereof.

6. Process according to one of the preceeding claims, characterised in that the binding agent is selected from the group of Portland cement, composite cements, aluminium cement, oxychloirde cement, and sulphanated cement or mixtures thereof,
